# EUROPÄISCHE PATENTSCHRIFT

(11) **EP 3 514 042 B1**
(45) Veröffentlichungstag und Bekanntmachung des Hinweises auf die Patenterteilung: **01.09.2021**
(21) Anmeldenummer: 18211821.6
(22) Anmeldetag: 12.12.2018
(51) Int. Cl.: B62D 25/20, B62D 29/00, B60R 13/08, B60R 13/01

(54) **BODENELEMENT FÜR EIN KRAFTFAHRZEUG**
FLOOR ELEMENT FOR A MOTOR VEHICLE
ÉLÉMENT DE PLANCHER POUR UN VÉHICULE AUTOMOBILE

(30) Priorität: 23.01.2018 DE 102018200999
(43) Veröffentlichungstag der Anmeldung: 24.07.2019
(73) Patentinhaber: VOLKSWAGEN AKTIENGESELLSCHAFT, 38440 Wolfsburg (DE)
(72) Erfinder: Hauschildt, Patrick, 38106 Braunschweig (DE)

(56) Entgegenhaltungen:
- EP-A1- 0 692 423
- EP-A1- 2 116 452
- EP-A1- 2 985 141
- DE-A1-102009 032 663
- DE-A1-102013 017 955
- FR-A1- 2 972 418
- GB-A- 2 513 834
- US-A1- 2003 151 274
- US-A1- 2017 057 431

## Beschreibung

Die Erfindung betrifft ein Kraftfahrzeug mit einem Bodenelement mit einer das Bodenelement nach oben hin abschließenden Decklage, einer mittleren Lage aus einem Trägermaterial, die eine Verstärkungsstruktur aufweist, und einer unteren Lage, wobei die untere Lage ein Dämmmaterial aufweist.

Bodenelemente gattungsgemäßer Kraftfahrzeuge kommen im Regelfall im Laderaum eines Kraftfahrzeugs, insbesondere eines leichten Nutzfahrzeugs, zum Einsatz. Typische Ansprüche an ein solches Bodenelement sind eine ebene Oberfläche sowie eine ausreichende Festigkeit, um beladen zu werden und um sich auf dem Bodenelement bewegende Personen tragen zu können.

Weiterhin ist das Gewicht des Bodenelements ein wichtiges Kriterium, da ein leichtes Bodenelement Energie und somit Kosten spart und den CO2-Ausstoß des Fahrzeugs verringert sowie ggf. die Reichweite des Fahrzeugs erhöht. Es sind daher gattungsgemäße Bodenelemente entwickelt worden, die in einer Sandwichbauweise aufgebaut sind, da ein solcher Aufbau Vorteile hinsichtlich der genannten Eigenschaften bietet. Es sind Bodenelemente bekannt, die eine obere und eine untere Abschlusslage aus einem Kunststoff aufweisen, zwischen denen ein Hohlräume aufweisendes Trägermaterial angeordnet ist. Dieses Trägermaterial kann beispielsweise aus Papier- oder Papp- oder Kunststoffwaben bestehen. Ebenso ist es bekannt, das Trägermaterial aus Kunststoff herzustellen.

Bodenelemente für Kraftfahrzeuge sind aus den Druckschriften US 2003/0151274 A1, DE 197 54 143 A1, US 2017/0057431 A1, EP 0 807 566 B1 und DE 697 20 585 T2 bekannt. Aus der US 2003/0151274 A1 ist ein Leichtfußboden für ein Fahrzeug bekannt, der einen Schichtaufbau aufweist. Dabei weist der Fußboden eine verstärkte Kernschicht mit einer wabenartigen Struktur auf, an die sich sowohl an ihrer Oberseite als auch an ihrer Unterseite eine Versteifungslage anschließt. Zum Fahrzeuginnenraum hin wird der Fußboden von mehreren Schaum- und Kunststofflagen abgeschlossen. An der Unterseite des Fußbodens kann eine akustisch dämmende textile Schicht angeordnet sein.

Als Alternative zu den genannten Bodenelementen sind auch einfache OSB-Holzladeböden, die mit Velours und PU-Schaum kaschiert sind, Ladeböden aus verschiedenen Kunststoffen oder Ladeböden aus Kunstfaser-PUR (Polyurethan) mit Holzeinlagen bekannt.

Neben dem Aspekt des Leichtbaus sind auch andere Kriterien zu beachten, wie beispielsweise eine niedrige Schadstoffemission und die bereits angesprochene Festigkeit des Bodenelements. Dabei soll die Festigkeit nach Möglichkeit über den gesamten Ladeboden im Wesentlichen gleichmäßig sein.

Weiterhin kann das Bodenelement genutzt werden, um die Akustik im Innenraum des Kraftfahrzeugs zu verbessern.

Es ist Aufgabe der vorliegenden Erfindung, ein Kraftfahrzeug mit einem Bodenelement anzugeben, dessen Bodenelement bei geringem Gewicht eine hohe Festigkeit aufweist und einen zufriedenstellenden akustischen Komfort im Fahrzeuginnenraum ermöglicht.

Die Erfindung löst die Aufgabe durch ein gattungsgemäßes Kraftfahrzeug mit einem Bodenelement, das sich dadurch auszeichnet, dass die Verstärkungsstruktur des Bodenelements in Bereichen, in denen das Bodenelement in einem in dem Kraftfahrzeug eingebauten Zustand auf einer Karosseriestruktur des Kraftfahrzeugs aufliegt, eine erste Dicke und in Bereichen, in denen das Bodenelement im eingebauten Zustand nicht auf der Karosseriestruktur aufliegt, eine zweite Dicke aufweist, wobei die erste Dicke größer als die zweite Dicke ist. Das Dämmmaterial kann beispielsweise ein Akustikvlies, ein Schall dämmender Schaum oder eine Dämmmatte sein. Insbesondere im Bereich der Elektromobilität ist eine gute Geräuschisolation wünschenswert. Dort fallen verstärkt hohe Frequenzen an, die bei den aktuell bekannten Konstruktionen relativ deutlich im Innenraum hörbar sind.

In einer bevorzugten Ausgestaltung ist das Dämmmaterial als Akustikvlies ausgestaltet. Ein solches Akustikvlies ist einfach zu verarbeiten, kostengünstig zu beschaffen, weist ein niedriges Gewicht auf und bewirkt gleichzeitig eine gute akustische Isolation. Das Akustikvlies kann als Meterware beschafft werden und auf die konkret benötigte Form zugeschnitten werden. Es muss im Normalfall nicht auf aufwändige Art und Weise mit den weiteren Bestandteilen des Bodenelements verbunden werden, sondern kann einfach als Schicht in den Sandwichaufbau des Bodenelements integriert werden.

Um ein einfaches Handling des Bodenelements zu ermöglichen, kann das Dämmmaterial vor dem Einbauen des Bodenelements in das Kraftfahrzeug beispielsweise durch eine Klebeverbindung mit der angrenzenden Schicht des Bodenelements verbunden werden. Die Klebeverbindung kann dabei vorzugsweise punktuell, bereichsweise oder auch vollflächig ausgestaltet sein. Ebenso ist es aber möglich, das Dämmmaterial als erste Schicht in den vorgesehenen Bauraum des Fahrzeugs einzulegen, bevor die weiteren Schichten des Bodenelements eingebaut werden. Die unterste Schicht des Bodenelements wird in diesem Fall einfach durch eine Klemmwirkung am vorgesehenen Ort gehalten. In einer speziellen Ausgestaltung kann das gesamte Bodenelement durch ein einfaches Einlegen oder Einschieben in das Kraftfahrzeug eingebaut werden. Das Bodenelement liegt dann zumindest teilweise auf der Karosseriestruktur des Fahrzeugs auf und kann durch an den Seitenwänden des Fahrzeugs vorgesehene Vorsprünge oder Schienen vertikal fixiert werden.

Um eine besonders gute akustische Isolation zu erreichen kann das Bodenelement derart ausgestaltet sein, dass das Dämmmaterial in einem nicht komprimierten Zustand eine Dicke von zumindest 8 mm, vorzugsweise von zumindest 12 mm, aufweist. Eine größere Dicke des Dämmmaterials bewirkt einen höheren Grad der akustischen Isolation. Dadurch, dass beispielsweise ein Akustikvlies komprimierbar ist, kann es sich einerseits flexibel an die Form des Bodenelements sowie andererseits an die Form der Karosseriestruktur, beispielsweise an Verstärkungssicken, anpassen.

Es ist mit Vorteil vorgesehen, dass das Dämmmaterial direkt an die Verstärkungsstruktur anschließt. Es ergibt sich dann ein einfacher Aufbau mit relativ wenigen Schichten. Es können so Materialkosten und Arbeitsaufwand bei Fertigung und Einbau des Bodenelements eingespart werden.

Eine vorteilhafte Ausgestaltung der Erfindung zeichnet sich dadurch aus, dass die Verstärkungsstruktur Hohlräume aufweist. Insbesondere kann die Verstärkungsstruktur eine vertikale Wände aufweisende Struktur, vorzugsweise eine Wabenstruktur oder eine Röhrchenstruktur sein. Solche Strukturen vereinen geringes Gewicht und hohe Festigkeit miteinander. Dadurch, dass die Wände der Verstärkungsstruktur sich in vertikaler Richtung erstrecken, wird erreicht, dass insbesondere in Belastungsrichtung, nämlich in Richtung der wirkenden Gewichtskraft der Ladung und/oder der das Fahrzeug nutzenden Personen und somit ebenfalls in vertikaler Richtung, eine hohe Festigkeit des Bodenelements erzielt wird. Leichte Abweichungen von der Vertikalen, beispielsweise bis zu 5° oder bis zu 10°, können dabei natürlich toleriert werden. Im Idealfall weist die Struktur aber vertikale Wände auf.

Die Verstärkungsstruktur kann beispielsweise aus Polypropylen oder Polyamid bestehen. Mögliche Materialien für das Akustikvlies sind beispielsweise Polyethylen oder Polypropylen.

In einer bevorzugten Ausführungsform besteht die mittlere Lage aus einem Kunststoff. Eine solche Ausgestaltung hat den Vorteil, dass geringes Gewicht und hohe Festigkeit mit Unempfindlichkeit gegenüber Umwelteinflüssen, insbesondere gegenüber Temperatur- und Feuchtigkeitseinflüssen, verbunden wird.

Eine Weiterbildung der Erfindung sieht vor, dass die Decklage eine Holzschicht aus Pappelholz oder Birkenholz, vorzugsweise aus Pappelsperrholz oder Birkensperrholz, aufweist. Es ist bekannt, Bodenelemente für Kraftfahrzeuge vollständig aus einem Holzwerkstoff herzustellen oder aber auch nur die Decklage aus einem Holzwerkstoff, beispielsweise aus OSB (Oriented Strand Board), herzustellen. Ein vollständig aus solch einem Holzwerkstoff hergestelltes Bodenelement ist jedoch relativ schwer. Weiterhin sollen mögliche Emissionen, die von bei der Herstellung des Holzwerkstoffs verwendeten Chemikalien herrühren können, gering gehalten werden.

Die Verwendung von Pappelholz oder Birkenholz, insbesondere von Pappelsperrholz oder Birkensperrholz, ermöglicht es insbesondere in Kombination mit der Verstärkungsstruktur ein leichtes, stabiles und emissionsarmes Bodenelement herzustellen. Dabei ist die die Decklage bildende Holzschicht vorzugsweise lackiert, um mögliche Emissionen zu reduzieren. Pappelsperrholz lässt sich bei gleichzeitig relativ geringen Kosten in sehr dünnen Dicken von beispielsweise 3 mm herstellen. Es weist eine geringe Dichte auf, so dass in Kombination mit der geringen Dicke bei Verwendung von Pappelsperrholz eine sehr leichte und dennoch stabile Decklage prozesssicher hergestellt werden kann. Ähnliches gilt auch für Birkensperrholz.

Es ist daher mit Vorteil vorgesehen, dass die Holzschicht eine Dicke zwischen 2 mm und 5 mm, vorzugsweise zwischen 2,5 mm und 3,5 mm, aufweist. Es wird durch die beschriebene Konstruktion möglich, eine sehr dünne Holzschicht zu verwenden, so dass die Vorteile des Materials Holz bei gleichzeitig äußerst niedrigem Gewicht ausgenutzt werden können. Die angegebenen Dicken bieten ein vorteilhaftes Verhältnis aus Festigkeit und Gewicht der jeweiligen Holzschicht.

Die Gesamtdicke des Bodenelements kann beispielsweise im Bereich von 20 bis 30 mm, bevorzugt im Bereich von 22 bis 28 mm, insbesondere im Bereich von 24 bis 26 mm, liegen.

Die Decklage kann mehrschichtig ausgestaltet sein und eine textile Lage aufweisen, die das Bodenelement zum Fahrzeuginnenraum hin abschließt. Die Decklage besteht dann zum Beispiel aus einer Holzschicht und einer Veloursschicht. Anstelle von Velours kann beispielsweise auch Dilours oder ein Nadelvlies verwendet werden. Die textile Lage kann auch aus einem Kunststoffmaterial hergestellt sein. In einer alternativen Ausführungsform kann anstatt einer textilen Lage auch eine Gummilage, eine Lage aus thermoplastischen Elastomeren, aus Polyurethan, Polyvinylchlorid oder ähnlichen Materialien verwendet werden. Anstatt der Holzlage kann auch eine Lage aus einem Kunststoff oder aus einem Holzwerkstoff zum Einsatz kommen.

Die Ausgestaltung des erfindungsgemäßen Bodenelements sieht vor, dass die Verstärkungsstruktur in Bereichen, in denen das Bodenelement in einem in ein Fahrzeug eingebauten Zustand auf einer Karosseriestruktur des Fahrzeugs aufliegt, eine erste Dicke und in Bereichen, in denen das Bodenelement im eingebauten Zustand nicht auf der Karosseriestruktur aufliegt, eine zweite Dicke aufweist, wobei die erste Dicke größer als die zweite Dicke ist. Mit anderen Worten ist die Dicke der Verstärkungsstruktur in Bereichen, in denen der Großteil der Kräfte von dem Bodenelement auf die Karosseriestruktur übertragen wird, im Vergleich zu den restlichen Bereichen des Bodenelements vergrößert.

So wird erreicht, dass die Kraftübertragung zwischen dem Bodenelement und der Karosseriestruktur effizient verläuft sowie dass das Bodenelement sicher mit der Karosseriestruktur verbunden ist und nur ein minimales Spiel aufweist. Dies wird dadurch erzielt, dass die untere Lage in Form des Dämmmaterials und insbesondere in Form des Akustikvlieses in den Kontaktbereichen zwischen Bodenelement und Karosseriestruktur auf eine geringe Dicke, beispielsweise auf eine Dicke von 0 bis 1,5 mm, komprimiert wird. Gleichzeitig wird so erreicht, dass ein großes Volumen für das Dämmmaterial und somit für die Geräuschdämmung zur Verfügung steht. Das Dämmmaterial kann also auch Bereiche, in denen das Bodenelement mit der Karosserie verbunden wird, überspannen. In diesen Bereichen kann das Dämmmaterial dann komprimiert sein, so dass dennoch eine stabile Verbindung zwischen dem Bodenelement und der Karosserie erzielt wird.

Vorteilhafterweise können die durch die unterschiedlichen Dicken der Verstärkungsstruktur entstehenden Hohlräume vollständig von dem Dämmmaterial ausgefüllt werden. Es wird so eine besonders starke akustische Dämmung erreicht. Die vertikalen Wände der Verstärkungsstruktur können einen Abstand von z.B. 0,5 bis 3 cm, vorzugsweise von 0,7 bis 1,5 cm, besonders bevorzugt von 0,9 bis 1,2 cm, aufweisen. Das Bodenelement weist dann ein besonders gutes Verhältnis von Festigkeit zu Gewicht auf.

Es ist möglich, dass das Bodenelement Aussparungen im Bereich von Sitzschienen oder anderen Verbindungselementen aufweist, so dass die Sitzschienen oder andere Verbindungselemente direkt mit der Karosseriestruktur verbunden werden können. Für Sitze oder andere Einbauten ist es notwendig, eine direkte und stabile Verbindung zur Karosserie des Fahrzeugs herzustellen. Es wäre daher nachteilig, Sitze oder bestimmte andere Auf-oder Einbauten am Bodenelement selbst zu befestigen, so dass es für diesen Fall möglich ist, entsprechende Aussparungen vorzusehen. Mit anderen Worten können im Bereich der Sitzschienen oder sonstiger Befestigungselemente für Sitze oder schwere Ladung Löcher, Schlitze oder anders geformte Ausschnitte im Bodenelement vorgesehen sein, so dass die Sitzschienen mit ihren Verbindungselementen durch diese Ausschnitte hindurch an der Karosseriestruktur befestigt werden können.

Ausführungsbeispiele der Erfindung werden anhand der Zeichnungen und der nachfolgenden Beschreibung näher erläutert. Es zeigen:
- Fig. 1:: eine geschnittene Ansicht eines ersten Ausführungsbeispiels eines erfindungsgemäßen Bodenelements,
- Fig. 2:: eine schematische Schnittansicht eines zweiten Ausführungsbeispiels eines erfindungsgemäßen Bodenelements,
- Fig. 3:: eine detaillierte, schematische Schnittdarstellung eines dritten Ausführungsbeispiels eines erfindungsgemäßen Bodenelements, und
- Fig. 4:: eine vollständige perspektivische Darstellung eines vierten Ausführungsbeispiels eines erfindungsgemäßen Bodenelements.

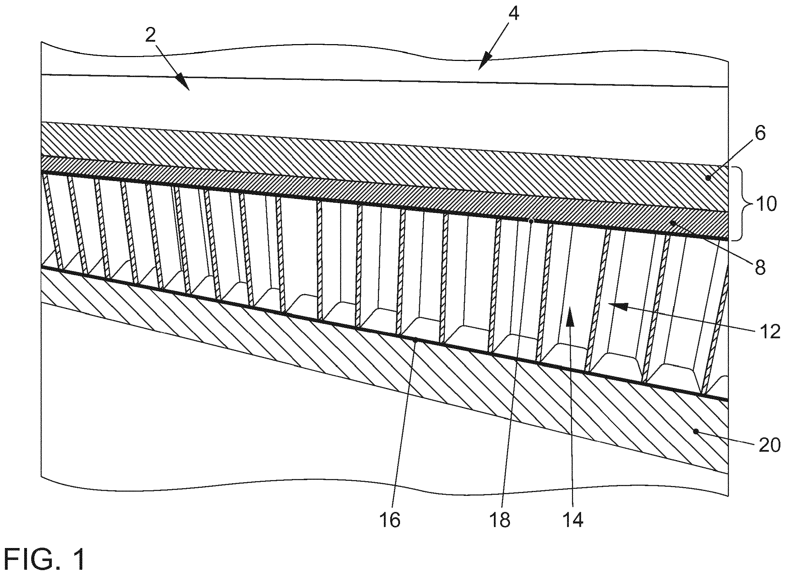

Figur 1 zeigt einen Schnitt durch ein erstes Ausführungsbeispiel eines erfindungsgemäßen Bodenelements 2. Das Bodenelement 2 ist mehrlagig aufgebaut. Zu erkennen sind der das Bodenelement zum Fahrzeuginnenraum 4 hin abschließende Velours-Bodenbelag 6 sowie eine darunter angeordnete dünne Schicht aus Pappelsperrholz 8. Die Schicht aus Pappelsperrholz 8 bildet zusammen mit dem Velours-Bodenbelag 6 die Decklage 10 des Bodenelements 2. Die Schicht aus Pappelsperrholz 8 ist im dargestellten Ausführungsbeispiel etwa 3 mm dick, kann aber auch beispielsweise eine Dicke von 2 mm, 2,5 mm, 4 mm oder 5 mm oder eine zwischen den angegebenen Werten liegende Dicke aufweisen. Unterhalb der Decklage 10 ist das Trägermaterial 12 angeordnet. Das Trägermaterial 12 besteht aus einer Vielzahl von aneinander angrenzenden Polypropylen-Waben 14. Im dargestellten Ausführungsbeispiel sind die Waben 14 sechseckig und entsprechen somit einer Honigwabenform. Alternativ sind aber auch runde Waben bzw. Röhrchen oder Waben in Form eines beliebigen anderen Vielecks, beispielsweise eine dreieckige, viereckige oder auch achteckige Form, möglich. Die Waben 14 sind im gezeigten Ausführungsbeispiel unten und oben jeweils von einer dünnen Deckschicht 16 bzw. 18 verschlossen. Die Deckschichten 16 bzw. 18 können in anderen Ausführungsformen entfallen, oder es kann jeweils nur eine der Deckschichten 16 bzw. 18 vorhanden sein.

Unterhalb des Trägermaterials 12 ist das Akustikvlies 20 angeordnet. Das Akustikvlies 20 schließt das Bodenelement 2 nach unten hin in Richtung der nicht dargestellten Karosseriestruktur ab. Es ist leicht komprimierbar und somit in der Lage, verschieden geformte Hohlräume vollständig auszufüllen. Das Akustikvlies 20 besitzt eine hohe Beständigkeit gegen Feuchtigkeit und sonstige äußere Einflüsse, so dass es langzeitbeständig ist, keine Neigung zu Schimmel oder anderen zersetzenden Prozessen aufweist sowie keine störenden Gerüche oder potentiell gesundheitsschädliche Dämpfe entwickelt. Im dargestellten Fall ist das Akustikvlies einstückig ausgestaltet.

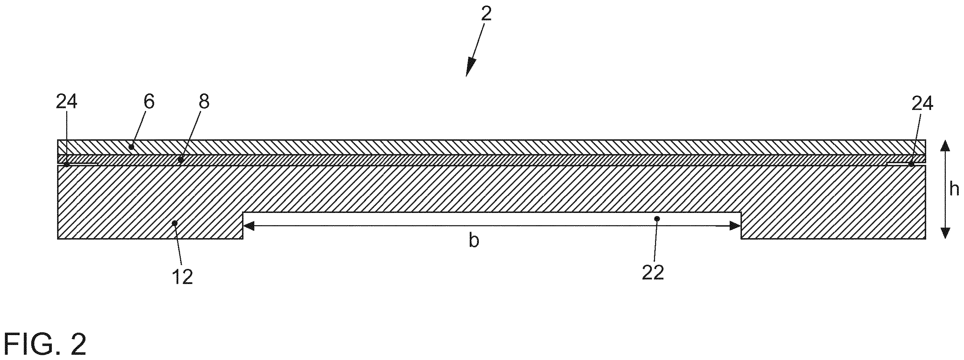

Figur 2 zeigt einen schematischen Schnitt durch eine zweite Ausführungsform eines erfindungsgemäßen Bodenelements 2. Zu erkennen sind wiederum die Holzschicht 8, der textile Bodenbelag 6 sowie die Verstärkungsstruktur 12, die aus PP-Waben besteht. Der gesamte dargestellte Aufbau hat insgesamt eine Höhe von etwa 25 mm. Die Verstärkungsstruktur 12 weist eine Ausnehmung 22 auf, die im eingebauten Zustand von dem nicht dargestellten Akustikvlies ausgefüllt wird. Die Ausnehmung 22 erstreckt sich in einem Bereich, der für die Verbindung des Bodenelements 2 mit dem Fahrzeug nicht benötigt wird. Im dargestellten Ausführungsbeispiel hat die Ausnehmung 22 eine Breite b von 127 mm. Weiterhin sind am rechten und am linken Ende des Bodenelements kleine Schlitze 24 zu erkennen, die zur Befestigung des Bodenelements 2 an dem nicht dargestellten Fahrzeug genutzt werden können. Beispielsweise können in die Schlitze Laschen oder Nasen eingreifen und so das Bodenelement 2 fixieren. Ebenfalls können die Schlitze 24 zum Toleranzausgleich gegenüber angrenzenden Bauteilen wie z.B. Triffstufen, einer Schlossträgerabdeckung oder Sitzschienen dienen. Die gesamte Höhe h des dargestellten Ausführungsbeispiels beträgt 25 mm.

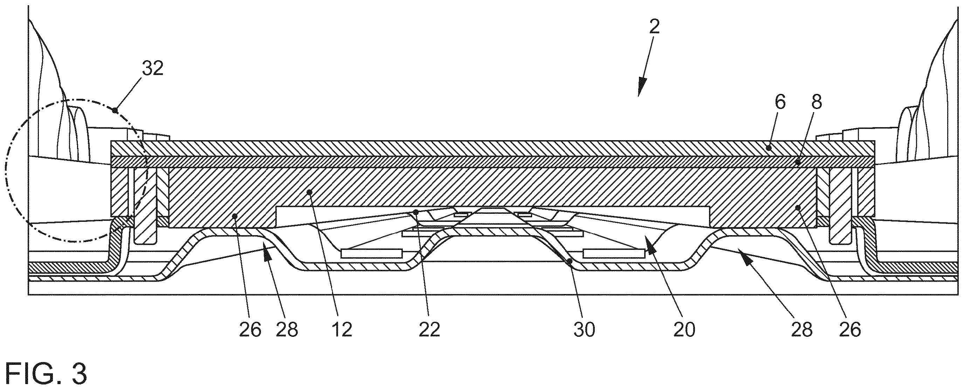

Figur 3 zeigt eine perspektivische geschnittene Darstellung eines weiteren Ausführungsbeispiels eines erfindungsgemäßen Bodenelements 2. Auch hier sind der Velours-Bodenbelag 6 sowie die Holzschicht 8 dargestellt. Die mittlere, aus dem Trägermaterial 12 bestehende Lage weist eine ähnliche Form auf wie in dem in Figur 2 dargestellten Ausführungsbeispiel auf. Auch hier ist ein Freiraum 22 vorhanden, der von dem Akustikvlies 20 ausgefüllt werden kann. In dem verstärkten Bereich 26 weist das Trägermaterial 12 eine Dicke von etwa 18 mm auf, wohingegen die Waben im Bereich des Freiraums 22 lediglich etwa 11 mm dick sind. In diesem Bereich stützt sich das Bodenelement 2 auf Sicken 28 des Karosserieelements 30 ab. Im linken Bereich der Figur ist neben dem Bodenelement 2 ein Bereich 32 mit einem Kreis markiert, in dem eine nicht dargestellte Sitzschiene verlaufen kann. Ebenso kann rechts von dem gezeigten Bodenelement 2 eine Sitzschiene angeordnet sein. Es ist entsprechend möglich, mehrere erfindungsgemäße Bodenelemente 2 zu kombinieren, um einen vollständigen Fahrzeugboden zu konstruieren. Ebenfalls ist es möglich, dass die dargestellten Bereiche, in denen die Sitzschienen verlaufen können, lediglich Ausschnitte aus dem gesamten Fahrzeugboden darstellen, so dass dieser komplett aus einem einzigen erfindungsgemäßen Bodenelement 2 bestehen kann.

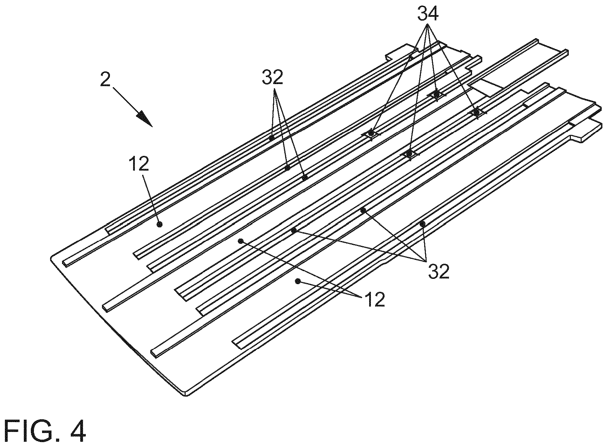

Figur 4 zeigt eine schematische Darstellung eines vollständigen Bodenelements 2. Das Bodenelement 2 ist dabei von schräg unten gezeigt. Der Schichtaufbau des Bodenelements 2 ist dabei nicht im Detail dargestellt. Zu erkennen sind insbesondere die Bereiche 32, die eine direkte Verbindung von dem Karosserieboden des Kraftfahrzeugs mit anderen Bauteilen ermöglichen und in denen insbesondere die Sitzschienen angeordnet sein können. Zu erkennen sind ebenfalls die Aussparungen 12, die jeweils in Bereichen angeordnet sind, die im eingebauten Zustand weder von Sitzschienen durchdrungen werden noch in direktem Kontakt mit dem Karosserieboden bzw. mit Teilen des Karosseriebodens in Form von Sicken stehen. Einige der Aussparungen 12 werden von Verbindungselementen 34 überspannt, um die Stabilität des Bodenelements 2 auch im nicht eingebauten Zustand zu gewährleisten.

### Bezugszeichenliste

- 2: Bodenelement
- 4: Fahrzeuginnenraum
- 6: Velours-Bodenbelag
- 8: Holzschicht
- 10: Decklage
- 12: Trägermaterial
- 14: Waben
- 16: dünne Deckschicht
- 18: dünne Deckschicht
- 20: Akustikvlies
- 22: Ausnehmung
- 24: Schlitz
- 26: verstärkter Bereich
- 28: Sicken
- 30: Karosserieelement
- 32: Bereich für Sitzschiene

## Patentansprüche

1. Kraftfahrzeug mit einem Bodenelement (2) mit einer das Bodenelement (2) nach oben hin abschließenden Decklage (10), einer mittleren Lage aus einem Trägermaterial (12), die eine Verstärkungsstruktur (14) aufweist, und einer unteren Lage, wobei die untere Lage ein Dämmmaterial (20) aufweist, **dadurch gekennzeichnet, dass** die Verstärkungsstruktur (12) in Bereichen, in denen das Bodenelement (2) in einem in dem Kraftfahrzeug eingebauten Zustand auf einer Karosseriestruktur (30) des Kraftfahrzeugs aufliegt, eine erste Dicke und in Bereichen, in denen das Bodenelement (2) im eingebauten Zustand nicht auf der Karosseriestruktur (30) aufliegt, eine zweite Dicke aufweist, wobei die erste Dicke größer als die zweite Dicke ist.

2. Kraftfahrzeug nach dem vorstehenden Anspruch, **dadurch gekennzeichnet, dass** das Dämmmaterial (20) in einem nicht komprimierten Zustand eine Dicke von zumindest 8 mm, vorzugsweise von zumindest 12 mm, aufweist.

3. Kraftfahrzeug nach einem der vorstehenden Ansprüche, **dadurch gekennzeichnet, dass** die Verstärkungsstruktur eine vertikale Wände aufweisende Struktur, vorzugsweise eine Wabenstruktur (14) oder eine Röhrchenstruktur, ist.

4. Kraftfahrzeug nach einem der vorstehenden Ansprüche, **dadurch gekennzeichnet, dass** das Trägermaterial (12) ein Kunststoff ist.

5. Kraftfahrzeug nach einem der vorstehenden Ansprüche, **dadurch gekennzeichnet, dass** die Decklage eine Holzschicht (8) aus Pappelholz oder Birkenholz, vorzugsweise aus Pappelsperrholz oder Birkensperrholz, aufweist.

6. Kraftfahrzeug nach Anspruch 5, **dadurch gekennzeichnet, dass** die Holzschicht (8) eine Dicke zwischen 2 mm und 5 mm, vorzugsweise zwischen 2,5 mm und 3,5 mm, aufweist.

7. Kraftfahrzeug nach einem der vorstehenden Ansprüche, **dadurch gekennzeichnet, dass** die durch die unterschiedlichen Dicken der Verstärkungsstruktur entstehenden Hohlräume (22) zumindest zu 80 %, bevorzugt zumindest zu 90 % und besonders bevorzugt vollständig, von dem Dämmmaterial (20) ausgefüllt werden.

8. Kraftfahrzeug nach einem der vorstehenden Ansprüche, **dadurch gekennzeichnet, dass** das Bodenelement (2) Aussparungen (32) im Bereich von Sitzschienen oder anderen Verbindungselementen aufweist, so dass die Sitzschienen oder andere Verbindungselemente direkt mit der Karosseriestruktur (30) verbunden werden können.

## Claims

1. Motor vehicle having a floor element (2) with a cover layer (10) which seals the floor element (2) at the top, a middle layer consisting of a support material (12) which has a reinforcing structure (14), and a bottom layer, wherein the bottom layer has an insulating material (20), **characterized in that** the reinforcing structure (12) has a first thickness in regions in which the floor element (2) lies on a body structure (30) of the motor vehicle when in an installed state in the motor vehicle, and a second thickness in regions in which the floor element (2) does not lie on the body structure (30) when in an installed state, wherein the first thickness is greater than the second thickness.

2. Motor vehicle according to the preceding claim, **characterized in that,** in an uncompressed state, the insulating material (20) has a thickness of at least 8 mm - preferably at least 12 mm.

3. Motor vehicle according to one of the preceding claims, **characterized in that** the reinforcing structure is a structure having vertical walls - preferably a honeycomb structure (14) or a tubular structure.

4. Motor vehicle according to one of the preceding claims, **characterized in that** the support material (12) is a plastic.

5. Motor vehicle according to one of the preceding claims, **characterized in that** the cover layer has a wood layer (8) made of poplar wood or birch wood - preferably made of poplar plywood or birch plywood.

6. Motor vehicle according to claim 5, **characterized in that** the wood layer (8) has a thickness of between 2 mm and 5 mm - preferably between 2.5 mm and 3.5 mm.

7. Motor vehicle according to one of the preceding claims, **characterized in that** the cavities (22) resulting from the different thicknesses of the reinforcing structure are at least 80%, preferably at least 90%, and particularly preferably completely filled with the insulating material (20).

8. Motor vehicle according to one of the preceding claims, **characterized in that** the floor element (2) has recesses (32) in the region of seat rails or other connecting elements so that the seat rails or other connecting elements can be connected directly to the body structure (30).

## Revendications

1. Véhicule automobile comportant un élément de plancher (2) doté d'une couche supérieure (10) fermant l'élément de plancher (2) vers le haut, d'une couche centrale en un matériau support (12), qui présente une structure de renfort (14) et d'une couche inférieure, la couche inférieure présentant un matériau isolant (20), **caractérisé en ce que** la structure de renfort (12) présente une première épaisseur dans des zones dans lesquelles l'élément de plancher (2) repose sur une structure de carrosserie (30) du véhicule automobile dans un état monté dans le véhicule automobile et une seconde épaisseur dans des zones dans lesquelles l'élément de plancher (2) ne repose pas sur la structure de carrosserie (30) dans l'état monté, la première épaisseur étant supérieure à la seconde épaisseur.

2. Véhicule automobile selon la revendication précédente, **caractérisé en ce que** le matériau isolant (20) présente, dans un état non comprimé, une épaisseur d'au moins 8 mm, de préférence d'au moins 12 mm.

3. Véhicule automobile selon l'une quelconque des revendications précédentes, **caractérisé en ce que** la structure de renfort est une structure présentant des parois verticales, de préférence une structure en nid d'abeilles (14) ou une structure en petit tubes.

4. Véhicule automobile selon l'une quelconque des revendications précédentes, **caractérisé en ce que** le matériau support (12) est une matière plastique.

5. Véhicule automobile selon l'une quelconque des revendications précédentes, **caractérisé en ce que** la couche supérieure présente une couche en bois (8) en bois de peuplier ou en bois de bouleau, de préférence en contreplaqué de peuplier ou en contreplaqué de bouleau.

6. Véhicule automobile selon la revendication 5, **caractérisé en ce que** la couche en bois (8) présente une épaisseur comprise entre 2 mm et 5 mm, de préférence entre 2,5 mm et 3,5 mm.

7. Véhicule automobile selon l'une quelconque des revendications précédentes, **caractérisé en ce que** les espaces creux (22) résultant des épaisseurs différentes de la structure de renfort sont remplis au moins à 80 %, de préférence au moins à 90 % et de manière particulièrement préférée complètement, du matériau isolant (20).

8. Véhicule automobile selon l'une quelconque des revendications précédentes, **caractérisé en ce que** l'élément de plancher (2) présente des évidements (32) dans la zone de glissières de siège ou d'autres éléments de liaison, de telle sorte que les glissières de sièges ou autres éléments de liaison peuvent être directement reliés à la structure de carrosserie (30).
